Europäisches Patentamt

European Patent Office

Office européen des brevets

(11) Publication number: **0 346 892**
A2

## EUROPEAN PATENT APPLICATION

(21) Application number: 89110841.7

(22) Date of filing: 15.06.89

(51) Int. Cl.⁴: **G05D 23/19 , F24D 19/10**

(30) Priority: 17.06.88 IT 2103088

(43) Date of publication of application:
**20.12.89 Bulletin 89/51**

(84) Designated Contracting States:
**AT BE CH DE ES FR LI LU NL SE**

(71) Applicant: **G.E.C. S.r.l.**
**Corso del Popolo 58/A**
**I-30172 Mestre (Venezia)(IT)**

(72) Inventor: **Olivotti, Sergio**
**Località Cibiana di Sotto 36**
**I-32040 Cibiana Di Cadore (Belluno)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Electric thermostatic servo-control for fluid adjustment valves in heating systems and the like.**

(57) Electric-thermostatic servo-control (4) for cutoff and adjustment valves for fluid in heating systems in general, using a motor system (6) with a thermostatic element which is electrically heated and biased by return springs for closing the cutoff valve (14) in the absence of electric power. The servo-control (4) comprises an auxiliary thermostatic element (10) having a control piston (11) interposed between the movable part of the thermostatic element which actuates the closure valve (14) and the stem (13) thereof, and at least one spring (17) coaxial to the stem (13), interposed between a flange (15) rigidly associated with the stem (13) and a fixed flange (16) arranged opposite inside the valve body. The spring (17) is coaxial to the valve-holder (1a) and has such dimensions as to be compressed when the valve (14) is in a stable closure position and deactivated, so as to react for automatically opening the valve (14) when the piston (11) of the auxiliary thermostatic element moves backwards under the effect of an environmental temperature below a certain preset value, whereby an environment can be heated to a minimum temperature to prevent freezing of the system.

Fig.3

# ELECTRIC THERMOSTATIC SERVO-CONTROL FOR FLUID ADJUSTMENT VALVES IN HEATING SYSTEMS AND THE LIKE

The present invention relates to an electric thermostatic servo-control for hydraulic valves for adjusting/cutting off the fluid used in heating systems and the like, particularly suitable for automatically preventing the danger of the freezing of the system during periods of low environmental temperatures.

More particularly, the present invention relates to an electric thermostatic servo-control with automatic intervention in the absence of electric power, for hydraulic valves installed on the radiators of public and private buildings or at the input of the hydraulic circuit of each house or on the centralized circuit, in order to adjust or cut off the flow of the thermal fluid which circulates in said radiators.

As known, various kinds of electrically servo-controlled valves for radiators and the like already exist; regardless of their structure, said known servo-controlled valves may be classified in two kinds, i.e. normally-closed valves and normally-open valves, as they define such positions when electric power is completely absent.

The electric power available in the room, i.e. the power which can be drawn from the meters of each user, is used to control said adjustment-cutoff valves applied to the individual radiators for heating the rooms or to the main hydraulic circuit.

Consequently, in the case of dwellings which are used only occasionally, the user must decide whether to keep the electric power connected to the servo-controlled valves of the radiators or not; in practice the power is disconnected for safety or energy-saving reasons.

In such conditions, if the installed servo-controlled valves are of the normally-closed kind, the user, by disconnecting electric power from his own system, permanently closes the valves which, by cutting off the heating fluid of the house, may entail the danger of the freezing of said system in low-temperature periods, causing considerable damage, such as the bursting of pipes and radiators, flooding of the house etc.; if the valves installed on the radiators are instead of the normally-open type, the user, by disconnecting electric power to his own house, permanently opens the valves and therefore maximally heats the empty house, with obvious increases in cost.

Electrically servo-controlled valves are generally constituted by a servo-control associated with the pipe which conveys the fluid to the radiator or the like, inside which a motor element, or an electromagnetic element, is mounted in a fixed arrangement and actuates a small piston or the like which in turn moves the stem of a fluid cutoff valve with respect to its fixed seat.

One or more suitably pre-loaded springs keep the valve in either a stably closed condition, as occurs in the case of a normally-closed valve in the absence of electric power, or in a stably open condition, as occurs in the case of a normally-open valve in the absence of electric power.

These kinds of servo-controls for cutoff valves therefore have only two well defined functions, i.e. opening and closure, and both functions are controlled by electric power.

Accordingly, the aim of the present invention is therefore to provide an electric thermostatic servo-control for valves of the normally-closed kind used to adjust/cut off the heating fluid in building conditioning systems and the like, capable of performing, besides normal operation when it is electrically activated, also an automatic safety action against the danger of the formation of ice in the system in the absence of electric power.

Another object of the invention is to provide a servo-control of the above specified kind, structured so as to be highly reliable, applicable and/or adaptable to any kind of hydraulic valve for heating systems and the like and having a cost which is compatible with its use.

This aim, this object and others which will become apparent hereinafter from the following description, are in practice achieved by an electric thermostatic servo-control for valves of the normally-closed kind for the hydraulic cutoff of fluid in heating systems, constituted by a box-like body wherein a thermostatic element is fixed, said thermostatic element being heated by means of electric resistors and actuating the stem of a closure valve against the biasing action of springs for keeping said valve in a stable closure position in the absence of electric power, said servo-control being constituted, according to the present invention, by at least one auxiliary thermostatic element having a control piston interposed between the movable part of said thermostatic element which actuates said closure valve, and the stem thereof, and by at least one spring coaxial to the stem and being interposed between a flange rigidly associated with said stem and a fixed opposite flange arranged inside the valve body, said spring being coaxial to the valve-holder stem and having such dimensions as to remain compressed when the valve is in a stable closure position and is deactivated, and so as to react and automatically open the valve when the piston of said auxiliary thermostatic element moves backwards under the effect of an environmental temperature lower than a certain preset value, whereby an environment can be heated to a minimum temperature for preventing freezing of the system.

More particularly, the control piston of said auxiliary thermostatic element is provided with means for connecting to the stem of the valve; said means are of an interchangeable and axially adjustable kind, so as to allow to adapt said means to various kinds of existing hydraulic valves.

The invention is now described in greater detail according to a preferred but non-exclusive practical embodiment with reference to the accompanying drawings, given only by way of non-limitative example, wherein:

figure 1 is an axial sectional view of a servo-controlled valve according to the invention, with the valve deactivated and in stable closure position;

figure 2 is a view of the same valve of figure 1 in open position by virtue of the action of the main electrically heated thermostatic element, and

figure 3 is a view of the same valve as in the preceding figures, in the absence of electric power but with the valve open under the action of the auxiliary thermostatic element and of the related opening return spring.

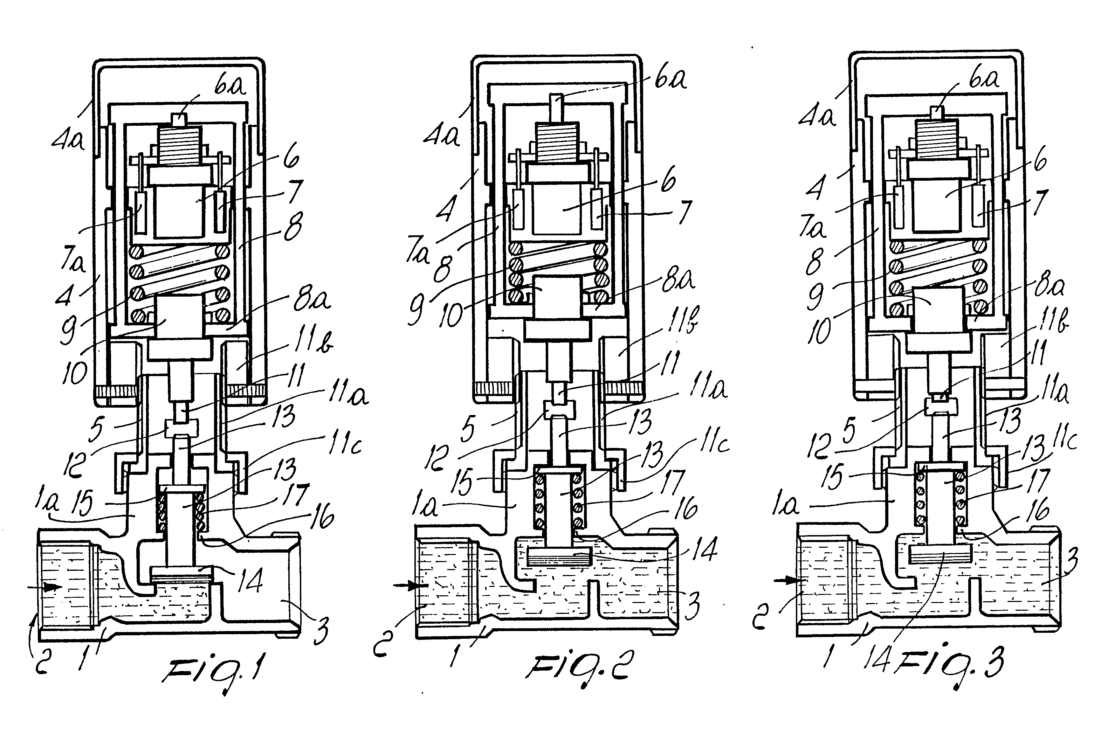

With reference to the above described figures, the thermostatic element with anti-freezing action is applicable to hydraulic valves of the kind which is normally closed in the absence of electric power (figure 1) and is inserted in a conventional body which is already provided with motor means for the actuation of the valve.

The servo-control according to the invention in fact has a T-shaped valve body, i.e. constituted by a pipe union 1 which is insertable in a pipe which conveys the heating fluid, for example, to a radiator, not illustrated; the incoming fluid enters the union at 2 and exits at 3 and then enters the radiator.

The actual servo-control 4 is provided perpendicular to the union 1 and is normally constituted by a hollow cylindrical body with an openable hood 4a; an annular connection 5 is provided at its opposite end for the screw coupling to the tubular inlet 1a of the union 1.

According to the present invention, a known motor system 6 is rigidly arranged inside the servo-control 4 and is constituted by a thermostatic element heated by electric resistors 7-7a; a frame-like body 8 is furthermore mounted inside said servo-control so as to be freely axially movable, and a cylindrical spiral spring 9 is interposed between the bottom 8a of the frame and the base 4b which supports the thermostatic system 6. The motor system 6 is of the kind provided with a movable piston 6a, the free end whereof is rigidly associated with the upper crosspiece 8b of the movable frame.

An auxiliary thermostatic element 10 is centrally associated with the base crosspiece 8a of the movable frame 8; said element 10 is never electrically powered, and its thermostatic fluid is set so as to have a preset contraction in volume when the temperature of the environment reaches a given value, for example 10°C above zero. The thermostatic element 10 is provided with a control piston 11 which is axially connected at 12 to the end of the stem 13 which actuates the cutoff valve 14. A cylindrical spiral spring 17 is furthermore interposed between a flange 15 rigidly associated with the stem 13 and an annular raised portion 16 coaxial to the base of the sleeve 1a which guides the stem 13; said spring is structured so as to offer a lower resistance to compression than the main spring 9, as will become apparent hereinafter.

The operation of the above described electric thermostatic servo-control can be explained with reference to the figures, which illustrate three successive operating steps.

Figure 1 illustrates the valve in its stable closure position, in the absence of the supply of electric power to the resistors 7-7a which heat the main thermostatic system 6. The closure of the valve is ensured by the fact that the compression force of the main spring 9 is greater than that of the spring 17, so that at normal environmental temperatures the smaller spring 17 remains compressed, allowing the stem 13 to keep the valve closed on its seat.

Figure 2 illustrates the valve 14 in an open position; when the thermostatic motor system 6 is fed with current, the piston 6a of said motor in fact moves the frame 8 upwards, simultaneously compressing the main spring 9. The upward motion of the frame 8 allows the underlying spring 17 to expand, thus moving the valve 14 to its open position and therefore allowing the passage of the heating fluid until the main thermostatic motor 6 is deactivated. When the motor 6 is deactivated, the main spring 9 moves the frame 8 downwards and closes the valve by compressing the lower spring 17.

In the steps of closure and opening of the valve so far described, the auxiliary thermostatic element 10 performs no function until the temperature of the environment drops below certain preset values, for which said thermostatic element has been preset beforehand.

In fact, as illustrated in figure 3, when electric power is cutoff from the main motor and the valve remains stably closed, thereby cutting off the flow of the heating fluid, the temperature of the environment may in fact drop below a minimum value (for example 10° C above zero) at which the heating fluid may freeze inside the system.

In order to avoid this danger of freezing, the thermostatic element 10, with no electric power, intervenes automatically, since the actuation piston 11 is moved backwards, thus allowing the lower spring 17 to expand and therefore causing the valve 14 to open; the environment is thus heated to the preset minimum temperature conditions for safety, to avoid the danger of freezing.

Still according to the invention, the auxiliary thermostatic with anti-freeze function may be of any known type and shape, providing that its operation does not depend on any electric power supply; the system connecting the piston 11 to the stem of the valve is axially adjustable by means of the screw couplings 11a, 11b and 11c, so as to be able to adapt the thermostatic element to any kind of hydraulic valve known in the field of heating fluid adjustment.

Finally, the invention as described and illustrated is susceptible to other structurally and functionally equivalent modifications and variations without abandoning the scope of the protection of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Electric thermostatic servo-control for hydraulic cutoff valves for fluid in heating systems of the type having a main thermostatic element heated electrically and opposing springs for keeping the valve in a stable closure position in the absence of electric power, characterized in that it comprises at least one auxiliary thermostatic element having an actuation piston interposed between the movable part of said thermostatic element which actuates said closure valve and the stem of said valve, and at least one spring coaxial to the stem and being interposed between a flange rigidly associated with said stem and a fixed opposite flange arranged inside the valve body, said spring being coaxial to the valve-holder stem and having such dimensions as to remain compressed when the valve is in stable closure position and deactivated so as to react for automatically opening the valve when the piston of said auxiliary thermostatic element moves backwards under the effect of an environmental temperature lower than a certain preset value, whereby an environment can be heated to the minimum condition which avoids the freezing of the system.

2. Servo-control according to claim 1, characterized in that said auxiliary thermostatic element has such dimensions and settings as to allow a reduction of its volume down to preset environmental temperature values which avoid freezing of the system.

3. Servo-control according to claims 1 and 2, characterized in that said secondary thermostatic element has interchangeable and axially adjustable means for connecting to the cutoff valve, for adapting it to different kinds of existing hydraulic valves.

Fig.1

Fig.2

Fig.3